# EUROPEAN PATENT SPECIFICATION

(11) **EP 2 291 251 B1**
(45) Date of publication and mention of the grant of the patent: **04.06.2014**
(21) Application number: 09734667.0
(22) Date of filing: 20.04.2009
(51) Int. Cl.: B21F 45/16, B29C 47/00, B29C 47/02, B29L 31/00, B42B 5/12, B42F 1/02, B65D 33/30, B65D 65/46

(54) **Bookbinding wire and paper clip with biodegradable coatings and a method for their decomposition**
Drahtbindeelement und Büroklammer mit biologisch abbaubaren Beschichtungen und ein Verfahren zu deren Abbau
Fil de reliure et trombone pourvus de revêtements biodégradables et un procédé pour leur décomposition

(30) Priority: 21.04.2008 EP 08154845
(43) Date of publication of application: 09.03.2011
(73) Proprietor: NV Bekaert SA, 8550 Zwevegem (BE)
(72) Inventor: GROB, André, 288925 Singapore (SG); POELMAN, Peter, B-9620 Velzeke (BE); LEPLAE, Alain, B-8560 Moorsele (BE)
(74) Representative: Krishnan, Sri
(86) International application number: PCT/EP2009/002863
(87) International publication number: WO 2009/129979

(56) References cited:
- WO-A-00/36177
- JP-A- 2004 167 891
- JP-A- 2006 007 667
- JP-A- 2006 159 627

## Description

### Technical Field

The invention relates to wire provided with a coating of a bio plastics material for use as a bookbinding wire or a paperclip. More particularly, the invention relates to a bookbinding wire and paperclip provided with a PLA coating. The invention further relates to a method for providing and for environmentally safe recycling said bookbinding wire or paperclip.

### Background Art

Steel wires provided with an extrudable polymer coating, such as polyvinylchloride or polyester, are generally known in the art. WO-A- 2007/060040 describes a steel wire with thick polymer coating for use as a bookbinding wire. The wire combines the elasticity of a pure polymer wire with the mechanical advantages of a steel wire, with a considerable reduction in weight. The document WO 00/36177 A discloses a bookbinding wire with a coating.

Bookbinding wires are used in many applications. Disposal after use creates a serious waste problem. Most polymer coatings, such as polyvinylchloride and polyester, are not or not fully degradable and burning leads to toxic materials. Normally, the steel wire would rust away, but the polymer coating prevents this. If the wire is thrown away as such, decomposition of the polymer and the steel wire takes a very long time resulting in a lot of long lasting and toxic waste, and a risk to the local environment.

Another problem arises when hazardous material, such as polymer coatings, need to be separated from the steel wire, e.g. before combustion or when recycling. This is a tedious job which is hardly ever applied. This is also not commercially or economically feasible.

Bio plastics that are biodegradable and/or compostable, e.g. plastics synthesised by com, are known in the art. The document JP 2004 167891 A discloses a method for the decomposition of a coated wire, the coating formed by a biodegradable plastic. Bio plastics, such as polylactide (PLA) have been used in the field of medicine. The high cost of the material prevented it from being used in other fields. Due to technological advances, however, the ecological advantages offered by bio plastics have now become available at a competitive price.

Bio plastics are commonly used e.g. in plastic bags, food-industry and horticulture, and also in medical instruments. The latter two applications are mainly aiming at a slow biodegradation of the bio plastics (coating) during the lifetime of the product. Other applications aim at biodegradation after use of the product, whereby the product may not show decomposition during its lifetime.

However, such bio plastics materials exhibit the drawback of being stiff and brittle and they cannot be used for applications where resilience and softness properties are required. Therefore, bio plastics are often mixed with other polymers or plasticizers that enhance the elasticity properties, hereby however also decreasing the biodegradability and/or compostability.

A problem with bookbinding wires is the spiral or helical binding form. The polymer coating needs to have specific elasticity properties to be able to withstand the torsions of the wire when manufactured and handled.

Therefore there is a need for new bookbinding wires and paperclips, having the same resilience properties as conventional polymers, that can be safely, easily and cheaply disposed of after use.

### Disclosure of Invention

It is an object of the invention to provide bookbinding wires and paperclips coated with a coating, having the same resilience properties as the conventional coatings, but which can be disposed of with little or even no problem.

It is a further object of the invention to provide bookbinding wires and paperclips that are biodegradable.

It is another object of the present invention to provide bookbinding wires and paperclips that combine the features of having a good corrosion protection during their use as bookbinding wire and being biodegradable once placed in an environment to decompose.

Bookbinding wires and paperclips are popular binding means to hold sheets of paper together. Bookbinding wires are used in an extensive range of applications, including but not limited to notebooks, catalogues, diaries, sample books, calendars and manuals. Binding by bookbinding wire can very easily be carried out with a simple and cheap machine that is available in any office or home environment. Paperclips are used very extensively for holding together smaller numbers of paper.

Bookbinding wire and paperclips are for example made of a steel wire covered by a polymer coating. The steel wire provides strength; the coating prevents the steel wire core from rusting.

Existing bookbinding wires comprise a core wire and a nylon coating, or a core wire and a tin layer coating, or a Fe coating covered by a Zn coating further covered by a synthetic coating. Technical characteristics of the coating are low frictional resistance, perfect adhesion to the core, excellent corrosion resistance, good tensile strength, low thickness and light weight.

The core wire is preferably a steel wire.

Bookbinding wire shapes are known in the art, as are also paperclip shapes. In one case bookbinding wire comes in spiral or helical binding. In another case bookbinding wire comes in double loop combs, also called wire-o or looped wire. The wire binding element is formed from a length of wire which is bent to form a series of curved, hairpin shaped prongs to hold the paper. The bookbinding wires and paperclips of the present invention are suitable for any known bookbinding or paperclip folding method or shape.

Bookbinding wires and paperclips come in all kinds of colors; the colors are added to the polymer coating.

A wire is provided comprising a bio plastics material for use as a bookbinding wire or paperclip.

Preferably this wire is a metal wire having a bio plastics coating.

The coating is a closed coating offering said wire a good corrosion protection when exposed at normal ambient conditions during use as bookbinding wire or as paperclip. The coating is biodegradable once the wire is placed in an environment suitable for decomposition of said coating.

This means that the wire combines the features of having a good corrosion protection during its use as bookbinding wire or paperclip wire and that the wire is biodegradable once the wire is placed in an environment suitable for decomposition of the coating.

The coating must be such that no degradation at normal ambient conditions for a bookbinding wire or for a clip can be observed. In addition when exposed at normal ambient conditions the coating offers the wire a good corrosion protection. To test the corrosion resistance of the wire, the wire was exposed to an environment at a temperature of 40 ° and a relative humidity of 100 %. After 500 hours of exposure no white rust or dark brown rust could be observed.

The corrosion protection of the wire during the use as bookbinding wire or as paperclip wire, is obtained as the coating forms a closed coating.

With "closed" coating is meant a coating that is covering the wire fully, i.e. that is covering the wire 100 % or substantially 100 %. For a person skilled in the art it is clear that some defects can be present in the coating.

Normal ambient conditions for a bookbinding wire are the environmental conditions such as pressure, temperature, relative humidity that are normal for a given location.

Once brought into an environment suitable for decomposition of the coating, holes are formed in the coating allowing said environment to form rust on the steel through said holes till after a certain period in time the coating will be completely decomposed.

An "environment suitable for decomposition of the coating" according to the present invention is any environment other than an ambient environment. This may be e.g. a damp environment, a compost heap or a burning oven. Decomposition may be established in e.g. 75 days.

Bio plastics have great ecological advantages: they are derived from renewable sources and can be decomposed by microorganisms without leaving any residue or giving rise to toxic byproducts. The same amount of carbon dioxide that is given off when the plastic is incinerated or decomposed, is absorbed from the atmosphere by the raw product. There is no increase of carbon dioxide, and thus no greenhouse gas emissions. Moreover, the cost of bio plastics is such that it has become competitive for use in many applications.

The term "bio plastics" covers a new generation of degradable, biodegradable and/or compostable plastics derived from renewable raw materials such as starch (e.g. com, potato, tapioca), cellulose, soy protein, lactic acid or any other. Bio plastics are not hazardous in production and decompose in the environment when discarded into carbon dioxide, water and biomass.

Com starch is currently the main raw material being used in the manufacture of bioplastic resins. Mater-Bi and Polylactide (PLA), both made from com-starch, are currently the two main resins (raw materials) being used today in the production of compostable and biodegradable plastics and are certified for compostability under standards set by international organizations. The field of bio plastics is constantly evolving with new materials and technologies being worked on and being brought to the market.

Said bio plastics material is a biodegradable material.

The term "biodegradable material" is material which will degrade from the action of naturally occurring microorganisms, such as bacteria or fungi over a period of time. A biodegradable plastic has the ability to be broken down, safely and relatively quickly, by biological means, into the raw materials of nature and disappear into the environment. These products can be solids biodegrading into the soil (which we also refer to as compostable) or liquids biodegrading into water. Biodegradable material is intended to break down when exposed to (naturally occurring) microorganisms such as bacteria or fungi over a period of time.

The term "compostable material" is material which is capable of undergoing biological decomposition in a compost site, such that the material is not visually distinguishable and breaks down to carbon dioxide, water, inorganic compounds, and biomass, at a rate consistent with known compostable materials (e.g. cellulose), and leaves no toxic residue (American Society for Testing & Materials (ASTM)).

In order for a material to be called compostable, three criteria need to be met:
a) it should biodegrade or break down into carbon dioxide, water, biomass at the same rate as cellulose (paper);
b) it should disintegrate so that the material is indistinguishable in the compost; and
c) eco-toxicity meaning that the biodegradation does not produce any toxic material and the compost can support plant growth.

"Degradable material" is material which will undergo a significant change in its chemical structure under specific environmental conditions resulting in a loss of some properties.

Viewed from a particular point of view, an embodiment of the bio plastics material is biodegradable for at least 75%, preferably at least 80%, more preferably at least 85%, yet more preferably at least 90%. In a preferable embodiment the bio plastics coating is 95% biodegradable. The coating may e.g. comprise 95% bioplastic and 5 % other polymer enhancing other characteristics like distortion or elongation.

In a most preferred embodiment said bio plastics coating is 100% biodegradable.

In one embodiment said coating comprises polylactide (PLA).

In a specific embodiment said coating comprises a mix or composition of different bio plastics. One bio plastics material may have more favourable features, such as e.g. elasticity, while the other may be more compostable. Said coating of bio plastics further comprises a color masterbatch.

In one another embodiment said coating may be mixed with plasticizers, dyes and/or lubricants.

Said coating has an elongation of 8%.

In an alternative embodiment said steel wire is covered with an intermediate metallic coating. In one embodiment said metallic coating is a copper, copper alloy, zinc, zinc alloy, nickel, nickel alloy, tin or tin alloy.

In a further embodiment the diameter of said steel wire is at least 0.2 mm and the thickness of said coating is at least 20% of the steel wire thickness. In one embodiment the total diameter of the steel wire with the coating is lower than 5 mm. In a preferred embodiment the total diameter of the steel wire with the coating is lower than 3 mm, and may vary between 0.60 mm and 1.60 mm.

In yet a further embodiment the steel wire is a low carbon steel wire with a carbon content below 0.20 wt%.

In this embodiment the steel wire has preferably a carbon content ranging between 0.04 wt % and 0.20 wt %. The complete composition of the wire rod may be as follows: a carbon content of 0.06 wt %, a silicon content of 0.166 wt %, a chromium content of 0.042 wt %, a copper content of 0.173 wt %, a manganese content of 0.382 wt %, a molybdenum content of 0.013 wt %, a nitrogen content of 0.006 wt %, a nickel content of 0.077 wt %, a phosphorus content of 0.007 wt %, a sulfur content of 0.013 wt %. In another embodiment the steel wire is a high carbon steel wire with a carbon content above 0.25 wt% and lower than 1.0 wt%.

The steel wire is highly mechanically deformed. In a specific case, the mechanically deformed steel wire forms a spiral binding or a double loop comb.

The thickness of the coating may determine the decomposing rate or environment: the thicker the coating, the longer it takes to decompose. This may depend on the application of use. For use in the paper industry, the environment is not very threatening for decomposition or rusting, thus a thin layer may suffice to cover the core wire. For specific use in a more humid environment, such as in archives, a thicker layer may be more suitable. In a further aspect the invention provides a bookbinding wire or paperclip of steel wire provided with a bio plastics coating, according to any of the previous embodiments.

In yet a further aspect the invention provides a bookbinding wire or paperclip of steel wire provided with a biodegradable coating, according to any of the previous embodiments.

Once the coated wire according to the invention is no longer needed, it can be subjected to burning or decomposition in a suitable medium. The biodegradable coating will burn without being toxic, or will decompose naturally over time, and the core wire will rust away.

Although steel wire covered with a biodegradable coating is protected from rust, the biodegradable coating will decompose with the passage of time. This is accomplished by a damp environment, e.g. damp soil or a compost heap, wherein the coating is decomposed by microorganisms, without leaving any residue or toxic byproducts. A hole will open up partly, hereby exposing the steel wire to water and condensation allowing the formation of rust. As time passes further on, decomposition of the biodegradable coating continues as does the rusting of the steel wire. Finally the biodegradable coating and the steel wire decompose and disappear.

The invention further provides a method for providing and for environmentally safe decomposing of bookbinding wires or paperclips comprising a bio plastics, biodegradable coating as described above. The method comprises the steps of
a) providing the bookbinding wires or paperclips,
b) placing said bookbinding wires or paperclips in an environment suitable for decomposition of the coating in order to form holes in said coating,
c) allowing said environment to form rust on the steel through said holes,
   and
d) waiting until the coating and the steel wire have completely decomposed.

An "environment suitable for decomposition of the coating" according to the present invention is any environment other than an ambient environment. This may be e.g. damp environment, a compost heap or a burning oven. Decomposition may be established in e.g. 75 days.

### Brief Description of Figures in the Drawings

Figure 1 shows a cross-section of a wire covered with a bio plastics resin.
Figure 2 shows a cross-section of a wire covered with a bio plastics resin and an intermediate layer.
Figure 3 shows a spiral loop bookbinding wire.
Figure 4 shows a bookbinding wire with double loop combs.
Figure 5 shows a paper clip.

### Mode(s) for Carrying Out the Invention

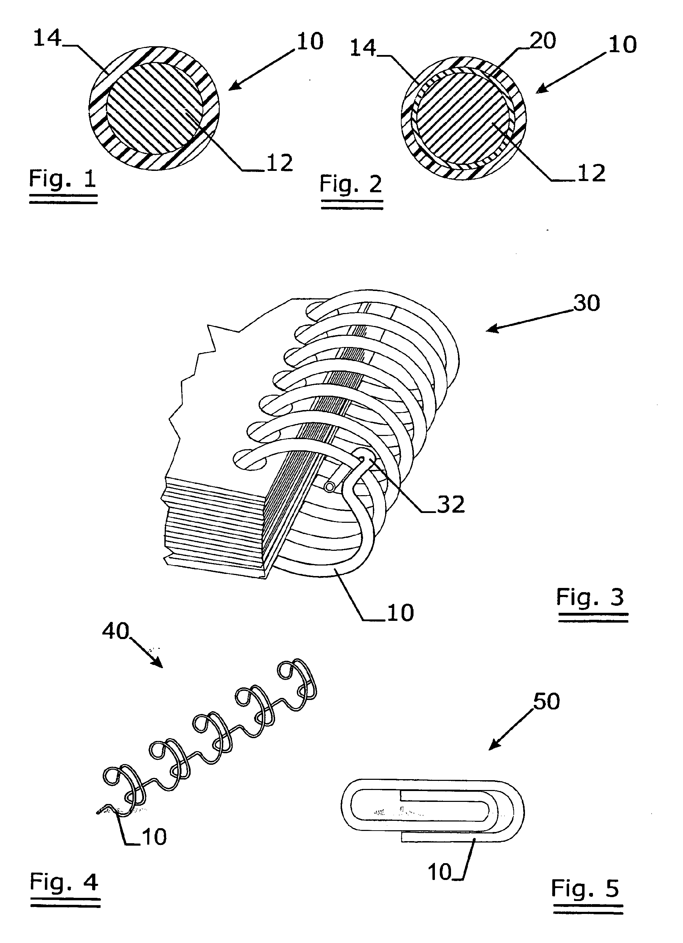

Figure 1 shows a wire 10 having a steel wire core 12 covered with a bio plastics coating 14. The diameter of the steel core ranges from 0.60 mm to 1.60 mm. The thickness of the coating ranges from 0.020 mm to 0.30 mm.

Figure 2 shows an alternative where the steel wire core 12 is also covered with a bio plastics coating 14. Additionally a superior corrosion resistance is ensured by an intermediate metallic layer 20.

Bookbinding wires 10 typically are highly mechanically deformed in that they take a helical 30 (Figure 3) or double loop 40 (Figure 4) binding form. In addition the helical binding form has at its end a hook form 32. On the one hand, the tensile strength of the wire must be very consistent over its length to ensure perfect comb forming. On the other hand, the bio plastics polymer coating must have specific resilience or elasticity properties to be able to withstand the torsions of the wire when manufactured and handled. Important properties for polymer coated bookbinding wires are therefore: low frictional resistance allowing a higher forming speed, which in tum results in a higher efficiency and productivity; perfect adhesion allowing extreme formability; superior corrosion resistance; aesthetic appeal, smoothness and uniformity.

Figure 5 shows a paper clip 50 made of a wire 10 with a steel core and a bio plastics polymer coating.

### Example 1: Wire coated with PLA and color masterbatch

A wire was coated with the biodegradable polymer polylactide (PLA) (PLA 2002D from NatureWorks®). PLA is derived from naturally-occurring plant sugar (com starch). PLA has a glass transition temperature of between 55 and 65 °C and a density of 1.25 g/cm³. Besides the advantages listed above, PLA also has a very low degree of toxicity. Furthermore, PLA is excellent for printing on and has great tensile strength, meaning that the coating thickness can be reduced. These are advantageous characteristics for use in the paper industry.

It is common in the paper industry that bookbinding wires and paperclips come with different colors, hereby coding certain documents or providing an aesthetic aspect. For this purpose, color master batches are available in a wide variety of transparent and opaque colors, for use with starch-blend biopolymers, polylactide (PLA), copolyesters and other degradable, biodegradable or compostable resins. Examples of providers are SUKANO® and PolyOne Corp^{®}. Color masterbatches may specifically be added for enhancing properties like denesting, antistatic, slip, anti-block, ultraviolet barrier, blue tone and anti-fog types.

It has been found that adding a color masterbatch to pure PLA greatly improves the mechanical properties of PLA coated wire for use in bookbinding wire and paperclips. As such, these polymers are less brittle and stiff and very suitable for coating bookbinding wires and paperclips.

Table 1 lists some test results. Pure PLA (natural 2002D) has an elongation of 4%, which may as such be sufficient to be applied without cracks on helical bookbinding wires in thin coatings. After addition of 2% Bio-RED (color masterbatch) the properties of the coating were strongly enhanced, up to an elongation of 8%.

**Table 1**

| Coating | Elongation |
|---|---|
| PLA natural 2002D | 4,46% |
| PLA + 2% Bio-RED | 8,09% |

Other PLA Masterbatches are e.g. Bio-White, Bio-Black, Bio-Green and Bio-Blue.

The bio plastics coated steel wires of the present invention may also be used in other applications.

A biodegradable coating such as PLA can be applied to the steel wire using the conventional extrusion process.

A biodegradable coating such as PLA gives a good adhesion to the steel wire without the necessity of applying particular adhesives or primers.

The adhesion between the thermoplastic material such as PLA and the steel wire can be evaluated by carrying out the following test. The PLA coating is removed in the longitudinal direction over about 5 cm by means of the sharp side of a knife. By means of the blunt side of the knife the PLA coating is slightly lifted. Finally, one tries to pull off the PLA coating from the metal member with the fingers. The more difficult the PLA coating is to pull off, the stronger the adhesion of the PLA to the steel wire. Tests with PLA coating have resulted in an adhesion level of 1 to 2 on a scale of 5.

## Claims

1. A bookbinding wire or paperclip comprising a wire covered with a coating of a plastic material, said coating being a closed coating offering said wire corrosion protection, **characterized in that** the plastic is a bioplastics material, **in that** the coating is biodegradable, wherein said coating of bio plastics comprises a color masterbatch selected from a group consisting of Bio-Red, Bio-White, Bio-Black, Bio-Green and Bio-Blue, and **in that** said coating has an elongation of at least 8%.

2. A bookbinding wire or paperclip according to claim 1, wherein said wire is a metal wire.

3. A bookbinding wire or paperclip according to any one of the preceding claims, wherein said coating is biodegradable for at least 75%.

4. A bookbinding wire or paperclip according to any one of the preceding claims, wherein said coating is 100% biodegradable.

5. A bookbinding wire or paperclip according to any one of the preceding claims, wherein said coating comprises polylactide (PLA).

6. A bookbinding wire or paperclip according to any one of the preceding claims, wherein the wire is a steel wire a covered with an intermediate metallic coating.

7. A bookbinding wire or paperclip according to claim 6, wherein said intermediate metallic coating is a copper, copper alloy, zinc, zinc alloy, nickel, nickel alloy, tin or tin alloy.

8. A bookbinding wire or paperclip according to any of the preceding claims, wherein the wire is a metal wire, the diameter of said metal wire is at least 0.2 mm and the thickness of said coating is at least 20% of the metal wire diameter.

9. A bookbinding wire or paperclip according to any of the preceding claim, wherein the total diameter of the wire is lower than 5 mm.

10. A bookbinding wire or paperclip according to any of the preceding claims, wherein the total diameter of the wire is lower than 3 mm.

11. A bookbinding wire or paperclip according to any of the preceding claims, wherein the metal wire is a low carbon steel wire with a carbon content below 0.20%.

12. A bookbinding wire or paperclip according to any of the preceding claims, wherein the wire is highly mechanically deformed.

13. A method for providing and for environmentally safe decomposing of bookbinding wires or paperclips comprising a steel wire covered with a coating of a bio plastic material, said coating being a closed coating offering said steel wire a corrosion protection during its use as bookbinding wire or as paperclip and said coating being biodegradable, wherein said coating of bio plastics comprises a color masterbatch selected from a group consisting of Bio-Red, Bio-White, Bio-Black, Bio-Green and Bio-Blue, and said coating has an elongation of at least 8%, said method comprising the steps of
a) providing the bookbinding wires or paperclips,
b) placing said bookbinding wires or paperclips in an environment suitable for decomposition of the coating in order to form holes in said coating,
c) allowing said environment to form rust on the steel through said holes, and
d) waiting until the coating and the steel wire have completely decomposed.

## Patentansprüche

1. Buchbindedraht oder Heftklammer, umfassend einen Draht, der mit einer Beschichtung aus einem Kunststoffmaterial überzogen ist, wobei die Beschichtung eine geschlossene Beschichtung ist, die dem Draht einen Korrosionsschutz bietet, **dadurch gekennzeichnet, dass** der Kunststoff ein Biokunststoffmaterial ist, dahingehend, dass die Beschichtung biologisch abbaubar ist, wobei die Beschichtung aus Biokunststoff einen Farb-Masterbatch umfasst, ausgewählt aus einer Gruppe bestehend aus Bio-Rot, Bio-Weiß, Bio-Schwarz, Bio-Grün und Bio-Blau, und dass die Beschichtung eine Dehnungsfähigkeit von wenigstens 8% aufweist.

2. Buchbindedraht oder Heftklammer nach Anspruch 1, wobei der Draht ein Metalldraht ist.

3. Buchbindedraht oder Heftklammer nach einem der vorangehenden Ansprüche, wobei die Beschichtung zu wenigstens 75% biologisch abbaubar ist.

4. Buchbindedraht oder Heftklammer nach einem der vorangehenden Ansprüche, wobei die Beschichtung zu 100% biologisch abbaubar ist.

5. Buchbindedraht oder Heftklammer nach einem der vorangehenden Ansprüche, wobei die Beschichtung Polylactid (PLA) umfasst.

6. Buchbindedraht oder Heftklammer nach einem der vorangehenden Ansprüche, wobei der Draht ein Stahldraht ist, der mit einer metallischen Zwischenbeschichtung überzogen ist.

7. Buchbindedraht oder Heftklammer nach Anspruch 6, wobei die metallische Zwischenbeschichtung ein/eine Kupfer, Kupferlegierung, Zink, Zinklegierung, Nickel, Nickellegierung, Zinn oder Zinnlegierung ist.

8. Buchbindedraht oder Heftklammer nach einem der vorangehenden Ansprüche, wobei der Draht ein Metalldraht ist, wobei der Durchmesser des Metalldrahtes wenigstens 0,2 mm beträgt, und die Dicke der Beschichtung wenigstens 20% des Durchmessers des Metalldrahtes beträgt.

9. Buchbindedraht oder Heftklammer nach einem der vorangehenden Ansprüche, wobei der Gesamtdurchmesser des Drahtes unter 5 mm liegt.

10. Buchbindedraht oder Heftklammer nach einem der vorangehenden Ansprüche, wobei der Gesamtdurchmesser des Drahtes unter 3 mm liegt.

11. Buchbindedraht oder Heftklammer nach einem der vorangehenden Ansprüche, wobei der Metalldraht ein Stahldraht mit niedrigem Kohlenstoffgehalt ist, bei dem der Kohlenstoffgehalt unter 0,20% liegt.

12. Buchbindedraht oder Heftklammer nach einem der vorangehenden Ansprüche, wobei der Draht stark mechanisch verformt ist.

13. Verfahren zur Bereitstellung und für das umweltverträgliche Abbauen von Buchbindedrähten oder Heftklammern, die einen Stahldraht umfassen, der mit einer Beschichtung aus einem Biokunststoffmaterial überzogen ist, wobei die Beschichtung eine geschlossene Beschichtung ist, die dem Stahldraht während dessen Verwendung als Buchbindedraht oder als Heftklammer einen Korrosionsschutz verleiht, und wobei die Beschichtung biologisch abbaubar ist, wobei die Beschichtung aus Biokunststoff einen Farb-Masterbatch umfasst, ausgewählt aus einer Gruppe bestehend aus Bio-Rot, Bio-Weiß, Bio-Schwarz, Bio-Grün, und Bio-Blau, und wobei die Beschichtung eine Dehnungsfähigkeit von wenigstens 8% aufweist, wobei das Verfahren die folgenden Schritte umfasst
a) Bereitstellung der Buchbindedrähte oder Heftklammern,
b) Anordnen der Buchbindedrähte oder Heftklammern in einer Umwelt, die für den Abbau der Beschichtung geeignet ist, um Löcher in der Beschichtung zu bilden,
c) Erlauben, dass die Umwelt durch die Löcher Rost auf dem Stahl bildet, und
d) Warten, bis sich die Beschichtung und der Stahldraht vollständig abgebaut haben.

## Revendications

1. Fil de reliure ou trombone comprenant un fil recouvert d'un revêtement d'un matériau plastique, ledit revêtement étant un revêtement fermé offrant audit fil une protection contre la corrosion, **caractérisé en ce que** le plastique est un matériau bioplastique, **en ce que** le revêtement est biodégradable, ledit revêtement de bioplastique comprenant un mélange-maître coloré choisi dans un groupe constitué par le Bio-Red, le Bio-White, le Bio-Black, le Bio-Green et le Bio-Blue, et **en ce que** ledit revêtement a un allongement d'au moins 8 %.

2. Fil de reliure ou trombone selon la revendication 1, ledit fil étant un fil métallique.

3. Fil de reliure ou trombone selon l'une quelconque des revendications précédentes, ledit revêtement étant biodégradable pour au moins 75 %.

4. Fil de reliure ou trombone selon l'une quelconque des revendications précédentes, ledit revêtement étant biodégradable à 100 %.

5. Fil de reliure ou trombone selon l'une quelconque des revendications précédentes, ledit revêtement comprenant un polylactide (PLA).

6. Fil de reliure ou trombone selon l'une quelconque des revendications précédentes, le fil étant un fil d'acier recouvert d'un revêtement métallique intermédiaire.

7. Fil de reliure ou trombone selon la revendication 6, ledit revêtement métallique intermédiaire étant du cuivre, un alliage de cuivre, du zinc, un alliage de zinc, du nickel, un alliage de nickel, de l'étain ou un alliage d'étain.

8. Fil de reliure ou trombone selon l'une quelconque des revendications précédentes, le fil étant un fil métallique, le diamètre dudit fil métallique étant d'au moins 0,2 mm et l'épaisseur dudit revêtement étant au moins de 20 % du diamètre du fil métallique.

9. Fil de reliure ou trombone selon l'une quelconque des revendications précédentes, le diamètre total du fil étant inférieur à 5 mm.

10. Fil de reliure ou trombone selon l'une quelconque des revendications précédentes, le diamètre total du fil étant inférieur à 3 mm.

11. Fil de reliure ou trombone selon l'une quelconque des revendications précédentes, le fil métallique étant un fil d'acier à faible teneur en carbone avec une teneur en carbone inférieure à 0,20 %.

12. Fil de reliure ou trombone selon l'une quelconque des revendications précédentes, le fil étant très déformé mécaniquement.

13. Procédé d'obtention et de décomposition sans danger pour l'environnement de fils de reliure ou de trombones comprenant un fil d'acier recouvert d'un revêtement d'un matériau bioplastique, ledit revêtement étant un revêtement fermé offrant audit fil d'acier une protection contre la corrosion pendant son utilisation comme fil de reliure ou comme trombone et ledit revêtement étant biodégradable, ledit revêtement de bioplastique comprenant un mélange-maître coloré choisi dans un groupe constitué par le Bio-Red, le Bio-White, le Bio-Black, le Bio-Green et le Bio-Blue, et ledit revêtement ayant un allongement d'au moins 8 %, ledit procédé comprenant les étapes consistant à
a) se procurer les fils de reliure ou trombones,
b) placer lesdits fils de reliure ou trombones dans un environnement approprié pour la décomposition du revêtement afin de former des trous dans ledit revêtement,
c) laisser ledit environnement former de la rouille sur l'acier à travers lesdits trous, et
d) attendre jusqu'à ce que le revêtement et le fil d'acier se soient complètement décomposés.
